# FASCICULE DE BREVET EUROPEEN

(11) **EP 3 716 378 B1**
(45) Date de publication et mention de la délivrance du brevet: **07.06.2023**
(21) Numéro de dépôt: 20165586.7
(22) Date de dépôt: 25.03.2020
(51) Int. Cl.: H01M 4/66, H01G 11/66

(54) **COLLECTEUR DE COURANT, ENSEMBLE ET DISPOSITIF DE STOCKAGE ASSOCIÉS**
STROMKOLLEKTOR, ENTSPRECHENDE ANORDNUNG UND SPEICHERVORRICHTUNG
CURRENT COLLECTOR, ASSOCIATED ASSEMBLY AND STORAGE DEVICE

(30) Priorité: 26.03.2019 FR 1903146
(43) Date de publication de la demande: 30.09.2020
(73) Titulaire: ARMOR BATTERY FILMS, 44100 Nantes (FR)
(72) Inventeur: BLIN, Marie-Anne, 44700 ORVAULT (FR); GUICHARD, Pierre, 44400 Nantes (FR); PAIREAU, Cyril, 44430 Le Loroux Bottereau (FR)
(74) Mandataire: Lavoix

(56) Documents cités:
- EP-A1- 2 500 969
- EP-A1- 3 399 574
- US-A1- 2009 130 564
- US-A1- 2009 148 759
- US-A1- 2013 209 889

## Description

### DOMAINE TECHNIQUE DE L'INVENTION

La présente invention concerne un collecteur de courant revêtu. L'invention se rapporte également à un ensemble et à un dispositif de stockage comportant un tel collecteur de courant.

### ARRIERE-PLAN DE L'INVENTION

Un accumulateur électrochimique comprend classiquement au moins quatre éléments: une électrode positive, une électrode négative, un électrolyte, ainsi que des collecteurs de courant pour chaque électrode. L'ensemble d'une électrode négative et d'un collecteur de courant forme une anode tandis que l'ensemble d'une électrode positive et d'un collecteur de courant forme une cathode.

Le principe de fonctionnement de ces accumulateurs se base sur le stockage réversible de l'énergie électrique en énergie chimique par la mise en oeuvre de deux réactions électrochimiques séparées et couplées. Ce sont les électrodes positives et négatives, qui baignent dans l'électrolyte qui sont le siège des réactions électrochimiques, dites faradiques. Les électrodes sont notamment réalisées en des matériaux actifs permettant de stocker et de déstocker les ions via des réactions d'oxydation et de réduction.

Au cours de la décharge, le matériau actif à l'électrode négative s'oxyde et libère d'une part des électrons qui sont acheminés par l'intermédiaire du collecteur de courant vers le circuit extérieur et d'autre part des cations qui migrent au travers de l'électrolyte vers l'électrode positive. Ensuite, les électrons qui ont traversé le circuit qui en a utilisé l'énergie, et les cations sont captés par le matériau actif à l'électrode positive qui se réduit. La densité d'énergie qu'un accumulateur peut libérer est fonction à la fois du potentiel et de la capacité de la cellule électrochimique, tous deux étant directement reliés à la chimie du système. Le potentiel d'une batterie est déterminé par la différence entre les potentiels des réactions d'oxydoréduction se produisant simultanément aux électrodes positives et négatives.

Les électrodes sont réalisées selon une composition, la composition comportant principalement un ou plusieurs matériau(x) actif(s) (>90% en masse), des particules conductrices assurant un bon transport des électrons vers l'ensemble des matériaux actifs et un liant qui permet d'assurer la cohésion des particules, ainsi que l'adhésion au substrat.

Le tout est fabriqué, en général, sous la forme d'une formulation comprenant au moins un solvant qui va permettre d'enduire l'électrode.

Ensuite les deux électrodes, positives et négatives, sont reliées ioniquement par un électrolyte. Celui-ci peut être liquide, sous forme de gel ou encore solide.

De par le fonctionnement intrinsèque de migration des ions des accumulateurs, leurs électrodes ont besoin de matériaux capables d'insérer et ou de désinsérer les ions. De nombreux développements sont donc menés pour optimiser ces électrodes et obtenir une densité d'énergie spécifique et une puissance spécifique plus élevées. Les critères de choix sont essentiellement axés sur la capacité disponible et le potentiel de fonctionnement - et donc l'énergie disponible - mais aussi la puissance ou encore la sécurité et le coût des matériaux.

L'énergie massique ou énergie spécifique est définie comme le rapport entre l'énergie restituable à un régime donné (régime de décharge auquel l'accumulateur est déchargé) et la masse de l'accumulateur. L'énergie massique s'exprime en Wh/kg.

Cette notion est particulièrement utile pour le dimensionnement d'une batterie dans les systèmes embarqués où la masse est un critère de dimensionnement prépondérant.

L'énergie volumique est le rapport entre l'énergie restituable à un régime donné et le volume de l'accumulateur. L'énergie volumique s'exprime en Wh/L. Cette notion est utile pour le dimensionnement d'une batterie stationnaire car, dans ces applications, le volume est souvent un critère plus déterminant que la masse.

Les technologies lithium présentent les meilleures caractéristiques en termes de densités d'énergie massique et volumique. Ces technologies sont donc préférentiellement choisies pour des applications nomades, telles que la téléphonie mobile ou les ordinateurs portables.

Toutefois, pour certaines applications et notamment dans le domaine automobile, la limitation en tension de tels accumulateurs usuels à des tensions inférieures ou égales à 3,5 Volts (V) est problématique. Aussi, il est souhaitable d'utiliser des accumulateurs de type lithium-ion présentant une tension supérieure, notamment d'environ 4,2 Volts (V).

Avec une aussi importante augmentation de la tension, les phénomènes de corrosion sont plus marqués.

Pour remédier à un tel problème, le document US 2012/0121974 propose la combinaison de deux éléments. Selon un premier élément, le collecteur de courant de la cathode est protégé par un revêtement conducteur protecteur poreux. Le revêtement poreux comporte du carbone ou du graphite conducteur. La protection par rapport à la corrosion implique aussi une modification de la solution électrolytique avec notamment l'ajout d'additifs comme du LiBOB ou du LiPF₆.

Toutefois, la modification de l'électrolyte est, d'une part, coûteuse et d'autre part, impacte les performances des batteries.

### RESUME DE L'INVENTION

Il existe donc un besoin pour un collecteur de courant pour électrode permettant d'obtenir un accumulateur présentant de meilleures performances tout en étant capable de délivrer une tension supérieure aux tensions délivrées dans l'état de la technique, notamment une tension supérieure à 3,5 Volts.

En effet, le choix de matériaux corrosifs permettant de viser de meilleures performances en termes de potentiel, il est avantageux pour les fabricants de batteries de pouvoir mettre au point leur système électrochimique à partir d'un collecteur de courant amélioré et dont les propriétés sont stables dans le temps.

Pour cela, la présente description porte sur un collecteur de courant d'un dispositif de stockage d'énergie électrique, le collecteur de courant étant revêtu d'une couche d'interfaçage, la couche d'interfaçage étant formée par enduction sur le collecteur de courant d'une composition (la composition étant la deuxième selon la dénomination de la description), la composition étant formée de particules, au moins 50% des particules présentant un diamètre moyen en volume inférieur ou égal à 10 micromètres.

Par l'expression « formée de », il convient d'entendre « formée par », c'est-à-dire que, dans ce contexte, les diamètres des particules sont mesurés dans la composition une fois formée et non à l'insertion.

Il est ainsi protégé un collecteur selon la revendication 1.

Suivant des modes de réalisation particuliers, le collecteur comprend une ou plusieurs des caractéristiques des revendications 2 à 9, prise(s) isolément ou suivant toutes les combinaisons techniquement possibles.

La présente description décrit aussi un ensemble selon la revendication 10.

La présente description se rapporte également à un dispositif de stockage d'énergie électrique selon la revendication 11.

### BREVE DESCRIPTION DES DESSINS

D'autres caractéristiques et avantages de l'invention apparaîtront à la lecture de la description qui suit de modes de réalisation de l'invention, donnée à titre d'exemple uniquement et en référence aux dessins qui sont :

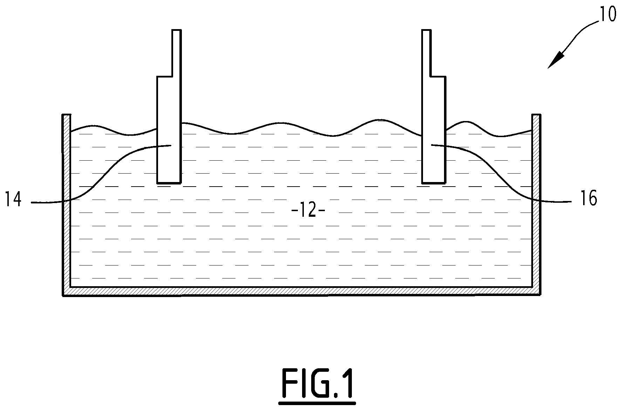

- figure 1, une représentation schématique d'un accumulateur de batterie comportant une anode et une cathode ;
- figure 2, une représentation schématique de côté en section de la cathode de l'accumulateur de la figure 1 ;
- figure 3, une photographie au microscope à balayage électronique d'un collecteur revêtu selon l'état de la technique, et
- figure 4, une photographie au microscope à balayage électronique d'un collecteur revêtu utilisé pour former la cathode de la figure 2.

### DESCRIPTION DETAILLEE DE MODES DE REALISATION

L'accumulateur 10 est destiné à être relié à d'autres accumulateurs électriques pour former un générateur électrique de tension et de capacité désirée. Un tel générateur est appelé batterie d'accumulateurs ou plus simplement une batterie.

Un accumulateur 10 utilise une technique de conversion réversible d'énergie pour stocker l'énergie et la restituer ultérieurement.

L'accumulateur 10 décrit utilisant une réaction électrochimique, l'accumulateur 10 est un accumulateur électrochimique.

L'accumulateur 10 comporte un électrolyte 12, une anode 14 et une cathode 16.

Typiquement, l'électrolyte 12 est composé de différents sels ioniques apportant des ions servant aux réactions de stockage de charges ou faradique, de carbonates et d'un solvant ou mélange de solvants pour permettre la solubilisation des ions.

L'électrolyte 12 est composé de différents sels ioniques apportant des ions servant aux réactions de stockage de charges ou faradique, de carbonates et d'un solvant ou mélange de solvants pour permettre la solubilisation des ions.

De préférence, les sels ioniques sont choisis parmi le sel de lithium bis (trifluorométhane sulfonyl)imide (LiTFSI), le sel de lithium bis(fluorosulfonyl)imide (LiFSI), le sel de lithium trifluoromethane-sulfonate (LiTF), le tetrafluoroborate de lithium (LiBF4), le bis oxalate borate de lithium (LiBOB), le lithium difluorooxalatoborate de lithium (LiDFOB) et un mélange de ceux-ci.

Les carbonates sont, par exemple, le carbonate de propylène (PC), le carbonate d'éthylène (EC), le carbonate de diméthyle (DMC), le carbonate d'éthyle méthyle (EMC) ou le carbonate de diéthyle (DEC).

On peut aussi trouver, en plus faible proportion, l'acétate de méthyle ou le formate de méthyle, l'acétonitrile, le tetrahydrofurane ou encore le gamma-butyrolactone, et des mélanges binaires ou ternaires, voire même quaternaires de ceux-ci, ainsi que des liquides ioniques.

Typiquement, l'anode 14 est constituée d'un matériau d'intercalation des ions, par exemple dans un accumulateur lithium-ion le carbone, qui est utilisé très majoritairement sous forme de « MesoCarbon MicroBeads » (MCMB), les graphites, qu'ils soient artificiels ou naturels ou de matériaux graphitiques comme le soft ou hard carbon ou d'autres types de matériaux d'électrode négative à base de titanate lithié (Li₄Ti₅O₁₂ ou LTO), de silicium, d'étain ou d'alliages.

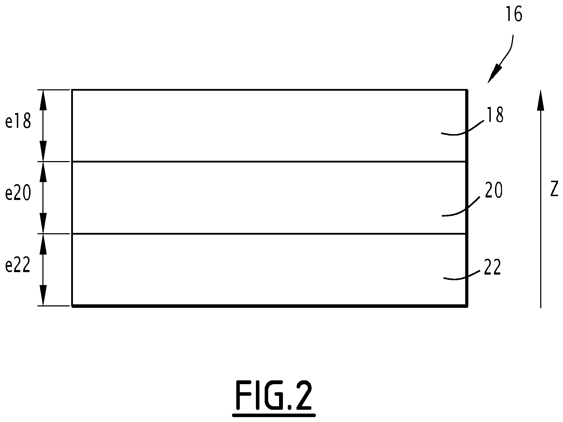

La cathode 16 est représentée plus en détail sur la figure 2.

La cathode 16 comporte une électrode 18, un collecteur de courant 22 et une couche d'interfaçage 20.

Le collecteur de courant 22, la couche d'interfaçage 20 et l'électrode 18 forment un empilement de couches selon une direction d'empilement notée Z.

L'électrode 18 est en contact avec l'électrolyte 12.

L'électrode 18 est réalisée en une première composition C1 dont les propriétés sont maintenant décrites.

La première composition C1 comporte un premier matériau d'intercalation MI1, un premier matériau liant ML1 et un premier additif conducteur AC1.

Le matériau d'intercalation est aussi désigné sous le terme « matière active ».

Dans un accumulateur lithium-ion, la matière active MI1 de l'électrode 18 est classiquement composée d'oxyde métallique lithié comme par exemple LiCoO₂ (LCO), LiNiMnCoO₂ (NMC), LiNiCoAlO₂ (NCA), LiMn₂O₄ (LMO), LiFePO4 (LFP), Li (LiNiMn)O₂ ou LiNiMnO (LNMO) ; LiS. D'autres exemples de matière active de l'électrode 18 sont possibles, par exemple pour les batteries sodium-ion, de tels exemples sont listés dans la publication « Advanced Organic Electrode Materials for Rechargeable Sodium-ion Batteries. » Zhao, Q., Lu, Y., & Chen, J. Advanced Energy Materials (2016).

Le choix du premier matériau liant ML1 peut varier considérablement tant que le premier matériau liant ML1 est inerte par rapport aux autres matériaux de l'électrode. Le premier matériau liant ML1 est un matériau, habituellement polymérique, qui permet de faciliter la mise en oeuvre des électrodes lors de leur fabrication. Le premier matériau liant ML1 comprend typiquement un ou plusieurs polymères choisis parmi les polymères thermoplastiques, les polymères thermodurcissables, les élastomères et les mélanges de ceux-ci.

Des exemples de polymères thermoplastiques comprennent, de manière non limitative, les polymères issus de la polymérisation de monomères vinyliques aliphatiques ou cycloaliphatiques, tels que des polyoléfines (parmi lesquels les polyéthylènes ou encore les polypropylènes), les polymères issus de la polymérisation de monomères vinyliques aromatiques, tels que les polystyrènes, les polymères issus de la polymérisation de monomères acryliques et/ou (méth)acrylates, les polyamides, les polyéthercétones, les polyimides.

Des exemples de polymères thermodurcissables comprennent, de manière non limitative des résines thermodurcissables (telles que des résines époxydes, des résines polyesters) éventuellement en mélange avec des polyuréthanes ou avec des polyéthers polyols ou vice versa.

Des exemples de polymères élastomères, comprennent, de manière non limitative les caoutchoucs naturels, les caoutchoucs de synthèse, les copolymères styrène-butadiène (connus également sous l'abréviation « SBR »), les copolymères éthylène-propylène (connus également sous l'abréviation « EPM »), les silicones.

Le premier matériau liant ML1 peut être un mélange de polymère(s) thermoplastique(s), de polymère(s) thermodurcissable(s) et/ou de polymère(s) élastomères.

D'autres premiers matériaux liants ML1 appropriés comprennent des polymères réticulés, tels que ceux fabriqués à partir de polymères ayant des groupes carboxyle et des agents de réticulation.

Le premier additif conducteur AC1 comporte un ou plusieurs types d'éléments conducteurs pour améliorer la conductivité électronique.

Des exemples d'éléments conducteurs comprennent, de façon non limitative, les carbones conducteurs, les graphites, les graphènes, les nanotubes de carbone, les fibres de charbon actif, les nanofibres de carbone non activées, les flocons métalliques, les poudres métalliques, les fibres métalliques et les polymères électriquement conducteurs.

A titre d'exemple, l'épaisseur e18 de l'électrode 18 est de 50 µm.

Le collecteur de courant 22 est réalisé en un matériau suffisamment conducteur pour assurer le transport électronique, léger, fin, mécaniquement résistant pour servir de substrat à l'électrode 18.

Par exemple, le collecteur de courant 20 est un feuillet métallique en fer, cuivre, aluminium, nickel, titane ou acier inoxydable.

De préférence, le collecteur de courant 20 est un feuillet métallique en aluminium.

A titre d'exemple, l'épaisseur e22 du collecteur de courant 22 est de 20 µm.

La couche d'interfaçage 20 réalise une interface entre le collecteur de courant 22 et l'électrode 18.

Cela signifie en particulier que la couche d'interfaçage 20 est une couche en contact d'une part avec le collecteur de courant 22 et d'autre part avec l'électrode 18.

La couche d'interfaçage 20 est enduite sur le collecteur de courant 22.

La couche d'interfaçage 20 présente une épaisseur e20 supérieure ou égale à 1 micromètre (µm).

De préférence, la couche d'interfaçage 20 présente une épaisseur e20 supérieure ou égale à 2 µm.

Avantageusement, la couche d'interfaçage 20 présente une épaisseur e20 comprise entre 1 µm et 4 µm.

La couche d'interfaçage 20 est réalisée selon une deuxième composition C2.

La deuxième composition C2 comporte un deuxième matériau liant ML2 et un deuxième additif conducteur AC2.

Avantageusement, la deuxième composition C2 consiste en un deuxième matériau liant ML2, un deuxième additif conducteur AC2 et un deuxième solvant S2.

Dans chacun des cas précités, la deuxième composition C2 comporte une pluralité de particules.

De telles particules peuvent présenter tous types de formes. De préférence, les particules sont sphériques ou sphériques et lamellaires.

Pour chaque particule, il est défini un diamètre comme la distance maximale entre deux points de la surface de la particule.

Le diamètre est, par exemple, mesuré par une technique de granulométrie laser.

La technique de mesure de la granulométrie par diffraction laser mesure la distribution granulométrique des particules en mesurant la variation angulaire de l'intensité lumineuse diffusée lorsqu'un faisceau laser traverse un échantillon de particules dispersées. Les grosses particules diffusent la lumière à de petits angles par rapport au faisceau laser et les petites particules diffusent la lumière à des angles supérieurs.

Parmi les particules de la deuxième composition C2, une proportion de particules présentent un diamètre moyen en volume inférieur ou égal à un diamètre seuil.

Dans chacun des cas, au moins 50% des particules présentent un diamètre moyen en volume (appelé Dv50) inférieur ou égal à 10 micromètres.

Le diamètre moyen en volume est un paramètre de distribution de taille de particules (voir notamment A Basic Guide to Particle Characterization, page 10, publié par Malvern Instruments Limited en 2012).

Le diamètre moyen en volume des particules (comme Dv50) peut être mesuré par lumière statique à l'aide d'un granulomètre commercial tel que la machine MasterSizer 3000 de Malvern. Les données sont traitées sur la base de la théorie de la diffusion de Mie pour calculer la distribution granulométrique des particules sur la base d'un modèle sphérique équivalent en volume. Plus précisément, cette théorie, qui est exacte pour les particules isotropes, permet de déterminer, dans le cas de particules non-sphériques, un diamètre de particules "effectif". Cette théorie est notamment décrite dans la publication de Van de Hulst, H.C., "Light Scattering by Small Particles", chapitres 9 et 10, Wiley, New York, 1957.

Selon un premier exemple, la proportion est supérieure ou égale à 90% et le diamètre seuil est inférieur ou égal à 30 µm, de préférence inférieur ou égal à 20 µm et encore de préférence inférieur ou égal à 10 µm.

Avantageusement, le diamètre seuil est inférieur ou égal à 5 µm.

Ainsi selon ce premier exemple, au moins 90% des particules présentent un diamètre moyen en volume (appelé Dv90) inférieur ou égal à 30 micromètres.

Selon un deuxième exemple, la proportion est supérieure ou égale à 99% et le diamètre seuil est inférieur ou égal à 40 µm, de préférence inférieur ou égal à 30 µm et encore de préférence inférieur ou égal à 20 µm.

Avantageusement, le diamètre seuil est inférieur ou égal à 10 µm.

Ainsi selon ce deuxième exemple, au moins 99% des particules présentent un diamètre moyen en volume (appelé Dv99) inférieur ou égal à 40 micromètres.

Selon un troisième exemple, la proportion est supérieure ou égale à 75% et le diamètre seuil est inférieur ou égal à 25 µm, de préférence inférieur ou égal à 15 µm et encore de préférence inférieur ou égal à 5 µm.

Avantageusement, le diamètre seuil est inférieur ou égal à 3 µm.

Ainsi selon ce troisième exemple, au moins 75% des particules présentent un diamètre moyen en volume (appelé Dv75) inférieur ou égal à 25 micromètres.

Selon un quatrième exemple, la proportion est supérieure ou égale à 50% et le diamètre seuil est inférieur ou égal à 5 µm et encore de préférence inférieur ou égal à 3 µm.

Avantageusement, le diamètre seuil est inférieur ou égal à 1 µm.

Ainsi selon ce quatrième exemple, au moins 50% des particules présentent un diamètre moyen en volume (appelé Dv50) inférieur ou égal à 5 micromètres.

Selon un cinquième exemple, toutes les particules présentent un diamètre moyen en volume ou égal à inférieur ou égal à 40 µm, de préférence inférieur ou égal à 30 µm et encore de préférence inférieur ou égal à 20 µm. Avantageusement, le diamètre moyen en volume pour une telle proportion de 100% est inférieur ou égal à 15 µm.

Dans chacun des exemples décrits, au moins 50% des particules de la deuxième composition C2 formant la couche d'interfaçage 20 présente un diamètre moyen en volume inférieur ou égal à 10 µm.

Le diamètre des particules est obtenu grâce au choix des matériaux liants ML2, des additifs conducteurs AC2 et des solvants S2, de la part en masse de ces différents éléments et des procédés de mise en oeuvre incluant le mélangeage et le broyage. La technique de mélangeage consiste à pré-disperser les additifs conducteurs dans les matériaux liants solubilisés, les additifs conducteurs sont à ce stade dans un état d'agglomérats (grosses particules de diamètre supérieur à 50 µm). La technique de broyage consiste à casser les agglomérats pour obtenir le diamètre moyen en volume des particules telles que précédemment décrites.

Ceci correspond au fait qu'il est bien évidemment entendu par l'expression « une composition formée de particules, au moins 50% des particules présentant un diamètre moyen en volume inférieur ou égal à 10 micromètres » que le diamètre moyen est mesuré sur les particules dans la composition et exclut la mesure du diamètre d'ingrédients sous forme de particules avant insertion dans la composition lorsque la mise en composition change la taille des particules.

Dans un tel contexte, il peut donc être écrit de manière équivalente que la deuxième composition C2 est formée par des particules ou que la deuxième composition est une composition comprenant des particules.

Autrement formulé, la mesure de diamètre moyen en volume est ici une granulométrie de l'encre carbonée, c'est-à-dire de la dispersion du carbone dans la matrice polymérique.

Le choix du deuxième matériau liant ML2 peut varier considérablement tant que le deuxième matériau liant ML2 est inerte par rapport aux autres matériaux de la deuxième composition C2. Le deuxième matériau liant ML2 comprend un ou plusieurs polymères choisis parmi les polymères thermoplastiques, les polymères thermodurcissables, les élastomères et les mélanges de ceux-ci.

Des exemples de polymères thermoplastiques comprennent, de manière non limitative, les polymères issus de la polymérisation de monomères vinyliques aliphatiques ou cycloaliphatiques, tels que des polyoléfines (parmi lesquels les polyéthylènes ou encore les polypropylènes), les polymères issus de la polymérisation de monomères vinyliques aromatiques, tels que les polystyrènes, les polymères issus de la polymérisation de monomères acryliques et/ou (méth)acrylates, les polyamides, les polyéthercétones, les polyimides, les alcools polyvinyliques, les polymères fluorés, le polyacrylonitrile.

Des exemples de polymères thermodurcissables comprennent, de manière non limitative des résines thermodurcissables (telles que des résines époxydes, des résines polyesters) éventuellement en mélange avec des polyuréthanes ou avec des polyéthers polyols ou vice versa.

Des exemples de polymères élastomères, comprennent, de manière non limitative les caoutchoucs naturels, les caoutchoucs de synthèse, les copolymères styrène-butadiène (connus également sous l'abréviation « SBR »), les copolymères éthylène-propylène (connus également sous l'abréviation « EPM »), les silicones.

Le deuxième matériau liant ML2 peut être en un mélange de polymère(s) thermoplastique(s), de polymère(s) thermodurcissable(s) et/ou de polymère(s) élastomères.

D'autres deuxièmes matériaux liants ML2 appropriés comprennent des polymères réticulés, tels que ceux fabriqués à partir de polymères ayant des groupes carboxyle et des agents de réticulation.

Le deuxième additif conducteur AC2 comporte un ou plusieurs type(s) d'éléments conducteurs pour améliorer la conductivité électronique.

Des exemples d'éléments conducteurs comprennent, de façon non limitative, les carbones conducteurs, les graphites, graphènes, nanotubes de carbone, les fibres de charbon actif, les nanofibres de carbone non activées, les flocons métalliques, les poudres métalliques, les fibres métalliques et les polymères électriquement conducteurs.

Le deuxième solvant S2 est choisi parmi l'eau, l'éthanol, le butanol, l'alcool isopropylique (aussi appelé isopropanol), l'éther de glycol et un mélange de ceux-ci.

Le fonctionnement de l'accumulateur 10 est conforme au fonctionnement d'un accumulateur électrochimique de l'état de la technique.

Pour évaluer les performances de la couche d'interfaçage 20, il a été comparé à l'oeil le recouvrement du collecteur de courant par une couche selon l'état de la technique et une couche d'interfaçage 20 selon l'état de la technique.

En particulier, il est comparé une composition commerciale (DAG EB-012 de chez Henkel Inc.) à une deuxième composition C2 présentant un diamètre moyen en volume (Dv90) de 5 µm pour 90% des particules et un diamètre moyen en volume (Dv90) 10 µm pour 99% des particules.

Par comparaison, il est mesuré que la composition commerciale comporte des particules dont 90% des particules présentent un diamètre seuil de 49 µm et 99% des particules présentent un diamètre seuil de 85 µm, et 50% des particules présentent un diamètre seuil de 13 µm.

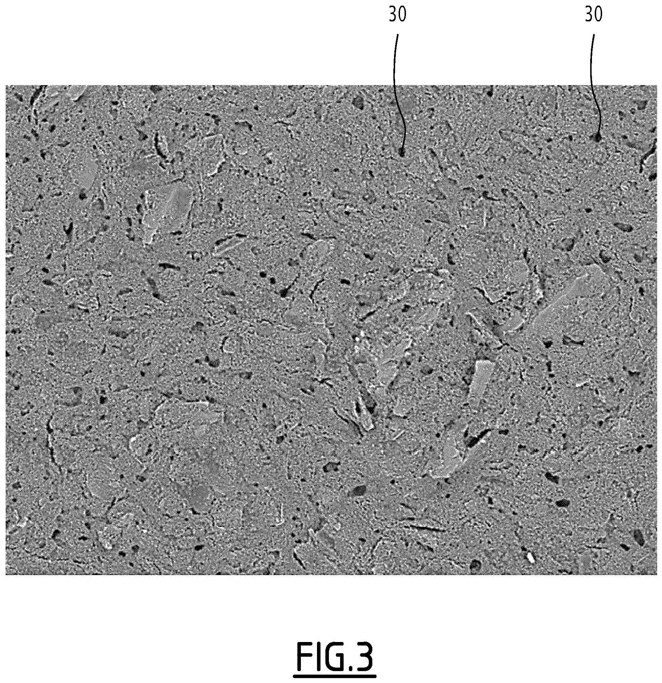

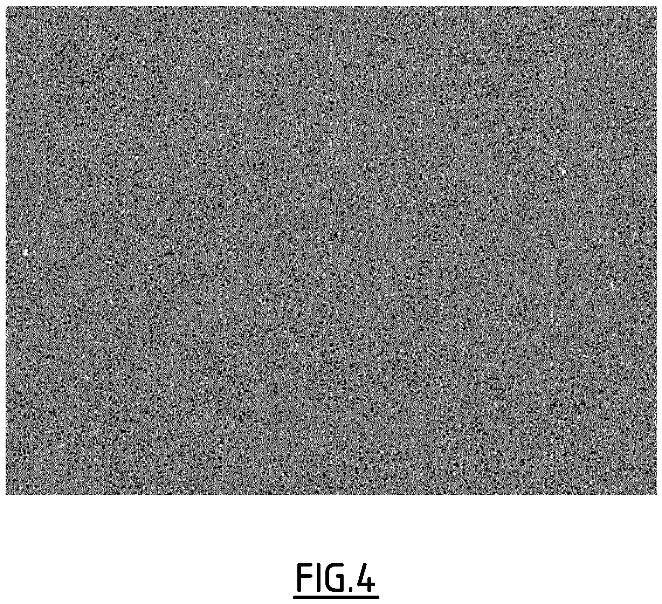

Les figures 3 et 4 correspondent à la photographie obtenue au microscope électronique à balayage dans ce cas avec un grossissement de 1000.

Dans le cas de la figure 3, La couche d'interfaçage obtenue à partir de l'enduction de la composition commerciale laisse apparaître des trous, même à une épaisseur de 5 µm, comme observé sur la figure 3. Il n'est pas possible de réduire l'épaisseur sans générer de zone avec des manques importants de recouvrement.

Même avec une épaisseur de 5 µm, le recouvrement n'atteint pas visuellement le recouvrement observé avec la couche d'interfaçage 20 d'une épaisseur de 1 µm obtenue à partir de la deuxième composition C2 observée sur la figure 4.

Le collecteur de la figure 4 semble recouvert entièrement par la couche d'interfaçage 20 alors que le collecteur est visible sur la figure 3, notamment au niveau du trou 30.

Ces tests correspondant à l'observation inattendue de la demanderesse qu'un bon recouvrement du collecteur est obtenu si la granulométrie des particules formant la couche d'interfaçage 20 est contrôlée.

Un tel recouvrement de bonne qualité permet une protection du collecteur de courant, la couche d'interfaçage agit donc comme une barrière physique à l'accès des ions responsables de la corrosion.

Des tests complémentaires ont montré que ce recouvrement permet d'obtenir une bonne résistance à la corrosion même pour des hauts potentiels.

En particulier, une oxydation du collecteur a lieu à partir d'un potentiel de 3,7 V pour la couche d'interfaçage obtenue à partir de la composition commerciale (3,7 V correspondant au potentiel d'oxydation de l'aluminium, les trous de la couche d'interfaçage sont des accès directs de l'électrolyte à l'aluminium qui s'oxyde) alors que l'oxydation du collecteur n'a pas lieu jusqu'à 4,2 V pour une couche d'interfaçage 20 telle que décrite précédemment.

Cela montre que la couche d'interfaçage 20 est une couche empêchant l'oxydation du collecteur de courant 22 lorsque le potentiel de fonctionnement du dispositif de stockage d'énergie électrique est supérieur ou égal au potentiel d'oxydation du matériau formant le collecteur de courant 22.

Ainsi, il a été décrit un collecteur de courant pour former un ensemble permettant d'obtenir un accumulateur présentant de meilleures performances tout en étant capable de délivrer une tension supérieure aux tensions délivrées dans l'état de la technique, notamment une tension supérieure à 3,5 Volts.

Le collecteur de courant peut également être utilisé pour d'autre dispositif de stockage d'énergie électrique comme un supercondensateur.

## Revendications

1. Collecteur de courant (22) d'un dispositif de stockage d'énergie électrique, le collecteur de courant (22) étant revêtu d'une couche d'interfaçage (20), la couche d'interfaçage (20) étant formée par enduction sur le collecteur de courant (22) d'une composition (C2),
la composition (C2) consistant en un additif conducteur (AC2), un solvant (S2) et un matériau liant (ML2),
l'additif conducteur (AC2) comportant au moins un élément choisi dans la liste constituée de :
- le carbone,
- le noir de carbone,
- le graphite,
- le graphène,
- un nanotube de carbone,
- une fibre de charbon actif, et
- une nanofibre de carbone non activée,
le matériau liant (ML2) comprenant un ou plusieurs polymères,
la composition (C2) étant une composition comprenant des particules, les particules étant obtenues par mise en oeuvre d'une technique de mélangeage et d'une technique de broyage, la technique de mélangeage consistant à pré-disperser l'additif conducteur dans le matériau liant solubilisé, l'additif conducteur formant des agglomérats avant broyage présentant un diamètre supérieur ou égal à 50 µm et la technique de broyage consistant à casser les agglomérats,
au moins 50% des particules présentant un diamètre moyen en volume inférieur ou égal à 10 micromètres,
le diamètre moyen en volume étant mesuré sur les particules dans la composition par une lumière statique à l'aide d'un granulomètre et en traitant les données obtenues par le granulomètre pour calculer la distribution granulométrique des particules sur la base d'un modèle sphérique équivalent en volume.

2. Collecteur de courant selon la revendication 1, dans lequel la couche d'interfaçage (20) est une couche formant une barrière physique à l'accès des ions responsables de la corrosion.

3. Collecteur de courant selon la revendication 1 ou 2, dans lequel la couche d'interfaçage (20) est une couche empêchant l'oxydation du collecteur de courant (22) même lorsque le potentiel de fonctionnement du dispositif de stockage d'énergie électrique est supérieur ou égal au potentiel d'oxydation du matériau formant le collecteur de courant (22).

4. Collecteur de courant selon l'une quelconque des revendications 1 à 3, dans lequel le collecteur de courant (22) est adapté pour un dispositif de stockage comportant un électrolyte comprenant des sels ioniques sont choisis parmi le sel de lithium bis (trifluorométhane sulfonyl)imide (LiTFSI), le sel de lithium bis(fluorosulfonyl)imide (LiFSI), le sel de lithium trifluoromethane-sulfonate (LiTF), le tetrafluoroborate de lithium (LiBF4), le bis oxalate borate de lithium (LiBOB), le lithium difluorooxalatoborate de lithium (LiDFOB) et un mélange de ceux-ci.

5. Collecteur de courant selon la revendication 4, dans lequel le sel ionique est le sel de lithium bis (trifluorométhane sulfonyl)imide (LiTFSI).

6. Collecteur de courant selon l'une quelconque des revendications 1 à 5, dans lequel au moins 90% des particules présentent un diamètre moyen en volume inférieur ou égal à 15 micromètres.

7. Collecteur de courant selon l'une quelconque des revendications 1 à 6, dans lequel au moins 99% des particules présentent un diamètre inférieur ou égal à 10 micromètres.

8. Collecteur de courant selon l'une quelconque des revendications 1 à 7, dans laquelle la couche d'interfaçage (20) présente une épaisseur supérieure ou égale à 1 micromètre.

9. Collecteur de courant selon l'une quelconque des revendications 1 à 8, dans laquelle la couche d'interfaçage (20) présente une épaisseur inférieure ou égale à 4 micromètres, préférentiellement inférieure ou égale à 2 micromètres.

10. Ensemble formant une anode ou une cathode comportant :
- une électrode, et
- un collecteur de courant (20) selon l'une quelconque des revendications 1 à 9.

11. Dispositif de stockage d'énergie électrique, accumulateur électrochimique ou supercondensateur, comportant un ensemble selon la revendication 10.

## Patentansprüche

1. Stromkollektor (22) einer elektrischen Energiespeichervorrichtung, wobei der Stromkollektor (22) mit einer Grenzflächenschicht (20) beschichtet ist, wobei die Grenzflächenschicht (20) durch Beschichten des Stromkollektors (22) mit einer Zusammensetzung (C2) gebildet wird,
wobei die Zusammensetzung (C2) aus einem leitfähigen Zusatzstoff (AC2), einem Lösungsmittel (S2) und einem Bindematerial (ML2) besteht,
das leitfähige Additiv (AC2), das mindestens ein Element enthält, das aus der Liste ausgewählt ist, die aus:
- Kohlenstoff,
- Ruß,
- Graphit,
- Graphen,
- ein Kohlenstoffnanoröhrchen,
- eine Aktivkohlefaser und
- eine nicht aktivierte Kohlenstoff-Nanofaser,
das Bindematerial (ML2) ein oder mehrere Polymere umfasst,
wobei die Zusammensetzung (C2) eine Zusammensetzung ist, die Partikel umfasst, wobei die Partikel durch Anwendung einer Mischtechnik und einer Mahltechnik erhalten werden, wobei die Mischtechnik darin besteht, den leitfähigen Zusatzstoff in dem solubilisierten Bindemittelmaterial vordispergiert, wobei der leitfähige Zusatzstoff vor dem Mahlen Agglomerate bildet, die einen Durchmesser von 50 µm oder mehr aufweisen, und wobei die Mahltechnik darin besteht, die Agglomerate zu zerbrechen,
wobei mindestens 50 % der Partikel einen volumenmittleren Durchmesser von 10 Mikrometern oder weniger aufweisen,
wobei der volumengemittelte Durchmesser an den Partikeln in der Zusammensetzung durch statisches Licht mit einem Granulometer gemessen wird und die von dem Granulometer erhaltenen Daten verarbeitet werden, um die Partikelgrößenverteilung auf der Grundlage eines äquivalenten sphärischen Volumenmodells zu berechnen.

2. Stromkollektor nach Anspruch 1, wobei die Grenzflächenschicht (20) eine Schicht ist, die eine physikalische Barriere für den Zugang von korrosionsverursachenden Ionen bildet.

3. Stromkollektor nach Anspruch 1 oder 2, wobei die Grenzflächenschicht (20) eine Schicht ist, die die Oxidation des Stromkollektors (22) selbst dann verhindert, wenn das Betriebspotenzial der elektrischen Energiespeichervorrichtung größer oder gleich dem Oxidationspotenzial des Materials ist, das den Stromkollektor (22) bildet.

4. Stromkollektor nach einem der Ansprüche 1 bis 3, wobei der Stromkollektor (22) für eine Speichervorrichtung mit einem Elektrolyten geeignet ist, der ionische Salze umfasst sind ausgewählt aus Lithiumsalz bis(Trifluormethansulfonyl)imid (LiTFSI), Lithiumbis(fluorosulfonyl)imid (LiFSI), Lithiumtrifluormethansulfonatsalz (LiTF), Lithiumtetrafluoroborat (LiBF4), Lithiumbisoxalatborat (LiBOB), Lithiumdifluorooxalatoborat (LiDFOB) und einem Gemisch davon.

5. Stromkollektor nach Anspruch 4, wobei das ionische Salz Lithiumbis(trifluormethansulfonyl)imid (LiTFSI)-Salz ist.

6. Stromabnehmer nach einem der Ansprüche 1 bis 5, wobei mindestens 90 % der Partikel einen volumenmittleren Durchmesser von 15 Mikrometern oder weniger aufweisen.

7. Stromabnehmer nach einem der Ansprüche 1 bis 6, wobei mindestens 99 % der Partikel einen Durchmesser von 10 Mikrometern oder weniger aufweisen.

8. Stromabnehmer nach einem der Ansprüche 1 bis 6, wobei die Grenzschicht (20) eine Dicke von mehr als oder gleich 1 Mikrometer aufweist.

9. Stromkollektor nach einem der Ansprüche 1 bis 8, wobei die Grenzschicht (20) eine Dicke von weniger als oder gleich 4 Mikrometern, vorzugsweise weniger als oder gleich 2 Mikrometern, aufweist.

10. Eine Anode oder Kathode bildende Anordnung mit:
- eine Elektrode, und
- einen einzigen Umrichter (20) nach einem der Ansprüche 1 bis 9.

11. Elektrische Energiespeichervorrichtung, elektrochemischer Akkumulator oder Superkondensator, mit einer Baugruppe nach Anspruch 10.

## Claims

1. A current collector (22) of a device for storing electrical energy, the current collector (22) being coated with an interfacing layer (20), the interfacing layer (20) being formed by coating on the current collector (22) with a composition (C2),
the composition (C2) consisting in a conductive additive (AC2), a solvent (S2) and a binder material (ML2),
the conductive material (MC) comprising at least one element chosen from the list made up of:
- carbon,
- carbon black,
- graphite,
- graphene,
- a carbon nanotube,
- an activated carbon fiber, and
- a nonactivated carbon nanofiber,
the binder material (ML2) comprising one or several polymers,
the composition (C2) being a composition comprising particles, the particles being obtained by carrying out a mixing technique and grinding technique, the mixing technique consisting in pre-dispersing the conductive additives in the solubilized binder material, the conductive additive forming agglomerates before grinding having diameter greater than or equal to 50 µm and the grinding technique consisting in breaking the agglomerates,
at least 50% of the particles having a mean diameter by volume of less than or equal to 10 micrometers,
the mean diameter by volume being measured by static light using a granulometer and by processing data obtained by the granulometer to calculate the granular distribution of the particles based on a spherical model of equivalent volume.

2. The current collector according to claim 1, wherein the interfacing layer (20) is a layer acting as a physical barrier to the access of the ions responsible for the corrosion.

3. The current collector according to claim 1 or 2, wherein the interface layer is a layer preventing the oxidation of the current collector (22) even when the operating potential of the device for storing electrical energy is superior or equal to the oxidation potential of the material of the current collector (22).

4. The current collector according to any one of claims 1 to 3, wherein the current collector (22) is adapted for a device for storing electrical energy comprising an electrolyte comprising ionic salts are chosen from among lithium bis(trifluoromethane sulfonyl)imide salt (LiTFSI), lithium bis(fluorosulfonyl)imide (LiFSI) salt, lithium trifluoromethane-sulfonate salt (LiTF), lithium tetrafluoroborate (LiBF4), lithium bis(oxalato)borate (LiBOB), lithium difluoro(oxalato)borate (LiDFOB) and a mixture thereof.

5. The current collector according to claim 4, wherein the ionic salt is lithium bis(trifluoromethane sulfonyl)imide salt (LiTFSI).

6. The current collector according to any one of claims 1 to 5, wherein at least 90% of the particles have a mean diameter by volume of less than or equal to 15 micrometers.

7. The current collector according to any one of claims 1 to 6, wherein at least 99% of the particles have a diameter of less than or equal to 10 micrometers.

8. The current collector according to any one of claims 1 to 7, wherein the interfacing layer (20) has a thickness greater than or equal to 1 micrometer.

9. The current collector according to any one of claims 1 to 8, wherein the interfacing layer (20) has a thickness less than or equal to 4 micrometers, preferably less than or equal to 2 micrometers.

10. An assembly forming an anode or a cathode, including:
- an electrode, and
- a current collector (20) according to any one of claims 1 to 9.

11. An electrical energy storage device, electrochemical accumulator or supercapacitor, including an assembly according to claim 10.
